# EUROPÄISCHE PATENTANMELDUNG

(11) **EP 1 255 390 A1**
(43) Veröffentlichungstag der Anmeldung: **06.11.2002**
(21) Anmeldenummer: 01124910.9
(22) Anmeldetag: 18.10.2001
(51) Int. Cl.: H04L 27/00, H04L 27/36

(54) **Verfahren und Vorrichtung zum wahlweisen Erzeugen von Mobilfunk-Signalen wenigstens zweier sich unterscheidender Mobilfunkübertragungsmoden**

(71) Anmelder: SIEMENS AKTIENGESELLSCHAFT, 80333 München (DE)
(72) Erfinder: Grossmann, Rainer, Dr., 80796 München (DE)

(57) **Zusammenfassung**

Verfahren und Vorrichtung zum wahlweisen Erzeugen von Mobilfunk-Signalen wenigstens zweier sich unterscheidender Mobilfunkübertragungsmoden.

Ein erster Übertragungsmodus basiert auf einer reinen Phasenmodulation und ein weiterer Übertragungsmodus basiert auf einer kombinierten Phasen- und Amplitudenmodulation. Dabei wird ein Leistungsverstärker nach Maßgabe der Amplitudeninformation derart gesteuert, dass das phasenmodulierte Signal eine Amplitudenmodulation unterzogen wird.

Das Verfahren kann in Mobilfunkendgeräten zum Einsatz kommen, die beispielsweise sowohl für den GSM als auch für den IS-136 Übertragungsmodus geeignet sein sollen.

## Beschreibung

Verfahren und Vorrichtung zum wahlweisen Erzeugen von Mobilfunk-Signalen wenigstens zweier sich unterscheidender Mobilfunkübertragungsmoden

Die vorliegende Erfindung betrifft ein Verfahren und eine Vorrichtung zum wahlweisen Erzeugen von Mobilfunk-Signalen wenigstens zweier sich unterscheidender Mobilfunk-Übertragungsmoden.

Weltweit existieren verschiedene Mobilfunk-Übertragungsmoden, man spricht auch von Mobilfunk-Übertragungsstandards, wie beispielsweise der GSM-Standard oder der IS136-Standard nebeneinander. Diese unterscheiden sich in mehr oder weniger starkem Maße voneinander. So existieren beispielsweise zu einem übergeordneten Mobilfunk-Übertragungsmodus verschiedene "Derivate", die sich lediglich durch die genutzten Frequenzbänder unterscheiden. Als Beispiel hierfür kann der GSM-Standard genannt werden, bei welchem von verschiedenen Mobilfunk-Netzbetreibern unterschiedliche Frequenzbänder genutzt werden, die grundlegenden Parameter des Mobilfunk-Übertragungsmodus, wie beispielsweise die Art der Modulation, jedoch für alle Übertragungsmoden gleich sind. Bei derart geringen Unterschieden ist es mit verhältnismäßig geringem technischen Aufwand möglich, mit ein und demselben Mobilfunk-Endgerät die verschiedenen Übertragungsmoden und somit Mobilfunknetze verschiedener Netzbetreiber zu nutzen.

Im Gegensatz hierzu ist es technisch jedoch wesentlich problematischer, mit ein und demselben Mobilfunk-Endgerät verschiedene Mobilfunk-Übertragungsmoden zu nutzen, welche sich in ihren Grundparametern deutlich voneinander unterscheiden, wie dies beispielsweise beim GSM-Standard und dem IS136-Standard der Fall ist. Diese beiden Standards haben zwar gemeinsam, daß sie TDMA-basiert sind, was bedeutet, daß bei beiden Mobilfunk-Übertragungsmoden, also bei dem GSM-Standard und bei dem IS136-Standard, verschiedene Funkverbindungen durch unterschiedliche Frequenzen und Nutzung unterschiedlicher Zeitschlitze unterschieden werden. Sie unterscheiden sich jedoch deutlich hinsichtlich der genutzten Frequenzbänder, der übertragenen Bitrate, der Taktung und der Modulationsart voneinander. Der wesentliche Unterschied zwischen diesen beiden Mobilfunk-Übertragungsmoden liegt in der unterschiedlichen Modulationsart: während - wie vorstehend angesprochen - der GSM-Mobilfunk-Übertragunsmodus auf einer reinen Phasenmodulation beruht, werden beim IS136-Mobilfunk-Übertragungsmodus zur Informationscodierung sowohl die Phase als auch die Amplitude des Mobilfunk-Signals verändert.

Um nun ein Multimode-Mobilfunk-Endgerät bereitzustellen, welches sowohl mit dem einen Mobilfunk-Übertragungsmodus als auch mit dem anderen Mobilfunk-Übertragungsmodus betrieben werden kann, wurde bislang der technisch aufwendige und kostenintensive Lösungsansatz gewählt, innerhalb des Mobilfunk-Endgeräts für jeden Mobilfunk-Übertragungsmodus einen gesonderten Chipsatz vorzusehen. Je nach lokaler Verfügbarkeit eines bestimmten Mobilfunknetzes mit einem bestimmten Mobilfunk-Übertragungsmodus wird bei einem derartigen Multimode-Mobilfunk-Endgerät jeweils der passende Chipsatz aktiviert. Konkret bedeutet dies, daß im Falle der Nutzung eines verfügbaren GSM-Mobilfunknetzes allein der jeweilige GSM-Chipsatz aktiv ist, hingegen im Falle der Nutzung eines verfügbaren IS136-Mobilfunknetzes allein der IS136-Chipsatz aktiv ist. Dieser Ansatz ist sowohl hardwaremäßig und fertigungstechnisch kostenintensiv als auch hinsichtlich energetischer Gesichtspunkte, insbesondere hinsichtlich des Stromverbrauchs, ungünstig.

Es ist demgegenüber eine Aufgabe der vorliegenden Erfindung, ein Verfahren und eine Vorrichtung der eingangs bezeichneten Art bereitzustellen, mit welcher unter verhältnismäßig geringem gerätetechnischen Aufwand eine einfache Erzeugung von Mobilfunk-Signalen zweier sich unterscheidender Mobilfunk-Übertragungsmoden erzielt werden kann.

Diese Aufgabe wird einerseits durch ein Verfahren zum wahlweisen Erzeugen von Mobilfunk-Signalen wenigstens zweier sich unterscheidender Mobilfunk-Übertragungsmoden gelöst, wobei wenigstens ein erster Mobilfunk-Übertragungsmodus auf einer reinen Phasenmodulation eines Basisband-Mobilfunk-Signals beruht und wenigstens ein weiterer Mobilfunk-Übertragungsmodus auf einer Kombination aus Phasenmodulation und Amplitudenmodulation des Basisband-Mobilfunk-Signals beruht, wobei weiter in einem ersten Schritt das Basisband-Mobilfunk-Signal einer Phasenmodulation unterzogen wird und in einem zweiten Schritt das phasenmodulierte Basisband-Mobilfunk-Signals über einen Leistungsverstärker verstärkt wird, wobei weiter für die Übertragung gemäß dem wenigstens einen ersten Mobilfunk-Übertragungsmodus in dem zweiten Schritt der Leistungsverstärker nach Maßgabe der für die Mobilfunk-Übertragung erforderlichen Sendeleistung gesteuert wird und wobei für die Übertragung gemäß dem wenigstens einen weiteren Mobilfunk-Übertragungsmodus zur Änderung der Amplitude des phasenmodulierten Mobilfunk-Signals in dem zweiten Schritt der Leistungsverstärker zusätzlich nach Maßgabe der in dem Basisband-Mobilfunk-Signal enthaltenen Amplitudeninformation gesteuert wird.

Das erfindungsgemäße Verfahren sieht also vor, mit einem in dem Mobilfunk-Endgerät vorhandenen Chipsatz zur Erzeugung eines rein phasenmodulierten Mobilfunk-Signals und eines nachgeschalteten Leistungsverstärkers sowohl den Mobilfunk-Übertragungsmodus zu bedienen, dessen Mobilfunk-Signal rein phasenmoduliert ist, als auch den Mobilfunk-Übertragungsmodus zu bedienen, dessen Mobilfunk-Signal sowohl auf einer Phasenmodulation als auch auf einer Amplitudenmodulation des Basisband-Mobilfunk-Signals beruht. Während für den ersten Mobilfunk-Übertragungsmodus der Leistungsverstärker allein zur Einstellung der gegenwärtig für die Mobilfunk-Übertragung erforderlichen Sendeleistung genutzt wird, wird dieser für den zweiten Mobilfunk-Übertragungsmodus sowohl zur Einstellung der Sendeleistung als auch zum Aufprägen der Amplitudeninformation auf sein rein phasenmoduliertes Eingangssignal genutzt. Somit ist es mit dem erfindungsgemäßen Verfahren möglich, mit ein und demselben Chipsatz sowohl einen auf einer reinen Phasenmodulation beruhenden Mobilfunk-Übertragungsmodus als auch einen auf einer Kombination aus Phasenmodulation und Amplitudenmodulation beruhenden Mobilfunk-Übertragungsmodus zu nutzen. Der Leistungsverstärker wirkt dabei nach dem Polartransmitterprinzip. Dies bedeutet, daß erst im Leistungsverstärker Phaseninformation und Amplitudeninformation im Stile von Polarkoordinaten zu einem Mobilfunk-Signal zusammengefaßt werden.

In einer Weiterbildung der Erfindung kann vorgesehen sein, daß der wenigstens eine erste Mobilfunk-Übertragungsmodus auf einer GMSK-Modulation beruht, insbesondere gemäß dem GSM-Mobilfunk-Übertragungsmodus, und dass der wenigstens eine zweite Mobilfunk-Übertragungsmodus auf einer π/4-DQPSK-Modulation beruht, insbesondere gemäß dem IS136-Mobilfunk-Übertragungsmodus. Bei diesen Mobilfunk-Übertragungsmoden ist vorgesehen, daß wenigstens ein Teil der sich unterscheidenden Mobilfunk-Übertragungsmoden auf TDMA (Time Division Multiple Access) beruhen.

Hinsichtlich des Leistungsverstärkers kann vorgesehen sein, daß dieser im zweiten Schritt in Sättigung betrieben wird. Diese Betriebsart des Leistungsverstärkers ist stromsparender und verlängert somit die Bereitschaftszeit bzw. Talktime-Zeit des jeweiligen Mobilfunk-Endgeräts. Im übrigen ist darauf hinzuweisen, daß bei der erfindungsgemäßen Lösung kein kostenintensiver linearer Verstärker erforderlich ist, wie dies dann der Fall ist, wenn ein phasen- und amplitudenmoduliertes Signal durch einen nachgeschalteten Leistungsverstärker verstärkt werden muß. Durch die Realisierung des erfindungsgemäßen Multimode-Verfahrens mittels eines einzigen Chipsatzes, welcher zur reinen Phasenmodulation ausgelegt ist, sowie eines nachgeschalteten nicht-linearen Verstärkers zum Aufprägen der Amplitudeninformation auf das phasenmodulierte Mobilfunksignal ist es möglich, einen nicht linearen und damit kostengünstigeren Leistungsverstärker zu verwenden.

In einer Weiterbildung der Erfindung kann vorgesehen sein, daß der Leistungsverstärker zumindest für den wenigstens einen ersten Mobilfunk-Übertragungsmodus, insbesondere für den GSM-Mobilfunk-Übertragungsmodus, zum Hochtasten bzw. Heruntertasten der Sendeleistung genutzt wird. Im Rahmen des GSM-Mobilfunk-Übertragungsmodus ist vorgesehen, daß am Anfang und am Ende eines jeden Sendebursts die Sendeleistung hochgetastet bzw. heruntergetastet wird (power ramping). Dadurch werden abrupte Leistungswechsel vermieden, und es wird erreicht, dass die jeweilige Sendeleistung, welche gegenwärtig für eine zuverlässige Mobilfunk-Übertragung erforderlich ist, schrittweise eingestellt wird. Um dieses Hochtasten bzw. Heruntertasten (power ramping) zu realisieren, muß der gewählte Leistungsverstärker entsprechend über einen Steuereingang steuerbar sein. Dieser Steuereingang kann im Rahmen der Erfindung zum Aufprägen der Amplitudeninformation ausgenutzt werden.

In einer Weiterbildung der Erfindung kann vorgesehen sein, daß das Basisband-Mobilfunk-Signal vor dem ersten Schritt zur Beseitigung von Amplitudeninformation normiert wird. Ein derartiges Normieren des Basisband-Mobilfunk-Signals ist nicht erforderlich, wenn das Basisband-Mobilfunk-Signal vor Erreichen des Leistungsverstärkers einer reinen Phasenmodulation unterzogen wird, so daß jegliche Amplitudeninformation verschwindet.

Ferner kann erfindungsgemäß vorgesehen sein, daß die Mobilfunk-Signale mit zu den sich unterscheidenden Mobilfunk-Übertragungsmoden korrespondierenden, unterschiedlichen Trägerfrequenzen erzeugbar sind. Um den technischen Aufwand weiter zu vereinfachen, kann in diesem Zusammenhang vorgesehen sein, daß die zu den sich unterscheidenden Mobilfunk-Übertragungsmoden korrespondierenden Frequenzen des Basisband-Mobilfunk-Signals oder/und die Trägerfrequenzen aus einem Grundtakt digital oder analog ermittelt werden. Zieht man wiederum das Beispiel eines GSM-Chipsatzes heran, welcher für die vorliegende Erfindung ausgenutzt werden kann, so kann ferner vorgesehen sein, daß der Grundtakt eine Frequenz von 13 MHz aufweist.

Hinsichtlich der unterschiedlichen Trägerfrequenzen der jeweils realisierten Mobilfunk-Übertragungsmoden trotz einheitlicher Grundfrequenz bereitzustellen zu können, kann erfindungsgemäß vorgesehen sein, daß die zu den sich unterscheidenden Mobilfunk-Übertragungsmoden korrespondierenden Trägerfrequenzen zumindest teilweise durch ein automatisches Frequenzkorrektur-Regelungsverfahren (AFC-Regelung) oder durch ein mathematisches Frequenzoffset-Verfahren, vorzugsweise aus dem vorstehend angesprochenen Grundtakt, ermittelt werden. Dadurch läßt sich ein enges Raster an Trägerfrequenzen erzeugen, so daß jede gewünschte Frequenz mit hinreichend guter Genauigkeit erzeugt werden kann. Die jeweiligen Verfahren, Frequenzkorrektur-Regelungsverfahren oder mathematisches Frequenz-Offset-Verfahren, können jeweils softwaremäßig im digitalen Teil oder in der Funkelektronik (d.h. im Funkteil) des Mobilfunk-Endgeräts durchgeführt werden.

Aufgrund der Tatsache, daß die zu nutzenden unterschiedlichen Mobilfunk-Übertragungsmoden mit teilerfremden Frequenzen arbeiten, daß jedoch zur einfachen technischen Realisierung im Rahmen eines Mobilfunk-Endgeräts nur ein Oszillator mit dem vorstehend angesprochenen einen Grundtakt vorgesehen ist, müssen die Frequenzen der Basisband-Mobilfunk-Signale wenigstens eines Mobilfunk-Übertragungsmodus aus diesem Grundtakt näherungsweise ermittelt werden. Daher kann in einer Weiterbildung der Erfindung vorgesehen sein, daß die zu den sich unterscheidenden Mobilfunk-Übertragungsmoden korrespondierenden Frequenzen der Basisband-Mobilfunk-Signale zumindest teilweise durch Interpolation, insbesondere lineare Interpolation, vorzugsweise aus dem Grundtakt, ermittelt werden. Es hat sich herausgestellt, daß die lineare Interpolation zu einer hinreichend großen Genauigkeit bei der Frequenzsynthese der Basisband-Mobilfunk-Signale führt, so daß aufwendigere Interpolationsverfahren für den Beispielsfall einer Realisierung des GSM-Standards und des IS136-Standards mit dem erfindungsgemäßen Verfahren nicht in Erwägung gezogen werden müssen. Dies kann hingegen bei weiteren Mobilfunk-Standards erforderlich sein.

Die eingangs genannte Aufgabe wird ferner durch eine Vorrichtung zum wahlweisen Erzeugen von Mobilfunk-Signalen wenigstens zweier sich unterscheidender Mobilfunk-Übertragungsmoden, insbesondere nach dem Verfahren der vorstehend beschriebenen Art, gelöst, umfassend:
- Basisband-Verarbeitungsmittel zum Erzeugen eines Basisband-Mobilfunk-Signals,
- Phasenmodulationsmittel zum Phasenmodulieren des erzeugten Basisband-Mobilfunk-Signals und
- wenigstens einen steuerbaren Leistungsverstärker zum Einstellen der Sendeleistung mit welcher die Mobilfunk-Signale gesendet werden,
wobei der wenigstens eine Leistungsverstärker in wenigstens einem ersten Mobilfunk-Übertragungsmodus das phasenmodulierte Mobilfunk-Signal in Abhängigkeit von der erforderlichen Sendeleistung verstärkt und in wenigstens einem weiteren Mobilfunk-Übertragungsmodus das phasenmodulierte Mobilfunk-Signal in Abhängigkeit von der erforderlichen Sendeleistung und der in dem Basisband-Mobilfunk-Signal enthaltenen Amplitudeninformation verstärkt.

Wie eingangs bereits angedeutet, kann diese Vorrichtung unter verhältnismäßig geringem technischen Aufwand bereitgestellt werden. Jedenfalls ist es nicht erforderlich, zwei vollständig voneinander unterschiedliche Chipsätze für jeden Mobilfunk-Übertragungsmodus bereitzustellen. Vielmehr kann ein einziger phasenmodulations-basierter Chipsatz genutzt werden und die Amplitudenmodulation durch entsprechende Ansteuerung des Leistungsverstärkers durchgeführt werden. Um die Basisband-Mobilfunk-Signale in Abhängigkeit von den jeweils realisierten Mobilfunk-Übertragungsmoden geeignet bereitstellen zu können, kann erfindungsgemäß weiter vorgesehen sein, daß die Basisband-Verarbeitungsmittel wenigstens zwei sich voneinander unterscheidende Modulatoren aufweisen, insbesondere einen GMSK- Modulator und einen π/4-DQPSK-Modulator. Dabei kann wenigstens einer dieser Modulatoren hardwaremäßig implementiert sein und der jeweils andere Modulator in dem Basisband-Verarbeitungmittel softwaremäßig implementiert sein.

Im Hinblick auf die beiden parallel vorgesehenen Modulatoren kann unabhängig davon, ob beide oder jeweils nur einer hardwaremäßig bzw. softwaremäßig implementiert sind, vorgesehen sein, daß je nach ausgewähltem aktuellem Mobilfunk-Übertragungsmodus der jeweils diesem Mobilfunk-Übertragungsmodus zugeordnete Modulator aktiv ist und der wenigstens eine weitere diesem Mobilfunk-Übertragungsmodus nicht zugeordnete Modulator inaktiv oder/und kurzgeschlossen ist. Ferner kann vorgesehen sein, daß die Basisband-Verarbeitungsmittel wenigstens einen Digital-Analog-Wandler zum Wandeln des Basisband-Mobilfunk-Signals aufweisen, der den Phasemodulationsmitteln vorgeschaltet ist. Gleichermaßen kann erfindungsgemäß vorgesehen sein, daß die Basisband-Verarbeitungsmittel wenigstens einen Digital-Analog-Wandler zum Wandeln des Basisband-Mobilfunk-Signals aufweisen, der dem Leistungsverstärker an dessen Steuereingang vorgeschaltet ist.

In einem konkreten Ausführungsbeispiel der erfindungsgemäßen Vorrichtung kann diese umfassen:
- einen digitalen Basisbandprozessor, welcher zumindest einen Teil der digitalen Komponenten der Basisband-Verarbeitungsmittel aufweist,
- einen dem digitalen Basisbandprozessor nachgeschalteten analogen Basisbandprozessor, welcher zumindest einen Teil der analogen Komponenten der Basisband-Verarbeitungsmittel aufweist, und
- ein Funkmodul, welches zumindest das Phasenmodulationsmittel und den Leistungsverstärker aufweist,
wobei der digitale Basisbandprozessor, der analoge Basisbandprozessor und das Funkmodul zur Erzeugung von Phaseninformation und Amplitudeninformation enthaltenden Mobilfunk-Signalen nach dem Prinzip eines Polartransmitters zueinander angeordnet sind.

Dabei kann im digitalen Basisband-Prozessor die gesamte Signalverarbeitung sowie die Zeitsteuerung (Timing) des jeweiligen Mobilfunk-Übertragungsstandards erfolgen. Ist einer der Basisband-Modulatoren softwaremäßig realisiert, so kann auch die Basisbandmodulation im digitalen Basisbandprozessor erfolgen. In dem nachgeschalteten analogen Basisbandprozessor kann dann bei hardwaremäßiger Realisierung eines Basisbandmodulators vor einer Digital-Analog-Wandlung die Basisbandmodulation erfolgen. Die Phasenmodulation des Basisband-Mobilfunk-Signals erfolgt dann schließlich ebenso wie die Leistungsverstärkung im Funkmodul. Es ist nochmals darauf hinzuweisen, daß durch die Realisierung der erfindungsgemäßen Multimode-Vorrichtung mittels des Polartransmitter-Prinzips als Leistungsverstärker ein nicht linearer Verstärker verwendet werden kann, welcher zum einen kostengünstig in der Herstellung ist und welcher zum anderen in Sättigung betrieben werden kann und somit aufgrund seines geringen Stromverbrauchs für eine verlängerte Standby-Zeit bzw. Sprechzeit sorgt.

Es ist ferner darauf hinzuweisen, daß obgleich vorstehend lediglich auf die Erzeugung von Mobilfunk-Signalen eingegangen wurde, die erfindungsgemäße Vorrichtung auch mit einem Empfangspfad versehen sein kann. Da allerdings bei einem Multimode-Gerät die wesentlichen Probleme bei der Erzeugung der Mobilfunk-Signale auftreten, und der Empfang von Mobilfunksignalen verschiedener Mobilfunk-Übertragungsmoden weniger aufwendig ist, sei lediglich darauf hingewiesen, daß der Empfangsmodus ebenfalls derart ausgelegt ist, daß er Signale verschiedener Mobilfunk-Übertragungsmoden empfangen und verarbeiten kann.

Die Erfindung betrifft ferner ein Mobilfunk-Endgerät, umfassend eine Vorrichtung der vorstehend beschriebenen Art, welche zur Durchführung eines Verfahrens der eingangs beschriebenen Art geeignet ist.

Die Erfindung wird im Folgenden anhand der beiliegenden Figuren beispielhaft erläutert. Es stellen dar:
- Fig. 1a: ein rein phasenmoduliertes Signal in Zeigerdarstellung;
- Fig. 1b: ein phasen- und amplitudenmoduliertes Signal in Zeigerdarstellung;
- Fig. 2: eine Funktionsblock-Darstellung eines herkömmlichen Prinzips zur Erzeugung eines sowohl phasen- als auch amplitudenmodulierten Mobilfunksignals;
- Fig. 3: eine Funktionsblock-Darstellung des der Erfindung zugrundeliegenden Polartransmitter-Prinzips;
- Fig. 4: eine Übersichts-Funktionsblock-Darstellung zur Realisierung der erfindungsgemäßen Hardware;
- Fig. 5: eine Funktionsblock-Darstellung zur Realisierung des GSM-Mobilfunk-Übertragungsmodus im Rahmen der in Fig. 4 gezeigten Hardware und
- Fig. 6: eine Funktionsblock-Darstellung zur Realisierung des IS136-Mobilfunk-Übertragungsmodus im Rahmen der in Fig. 4 gezeigten Hardware.

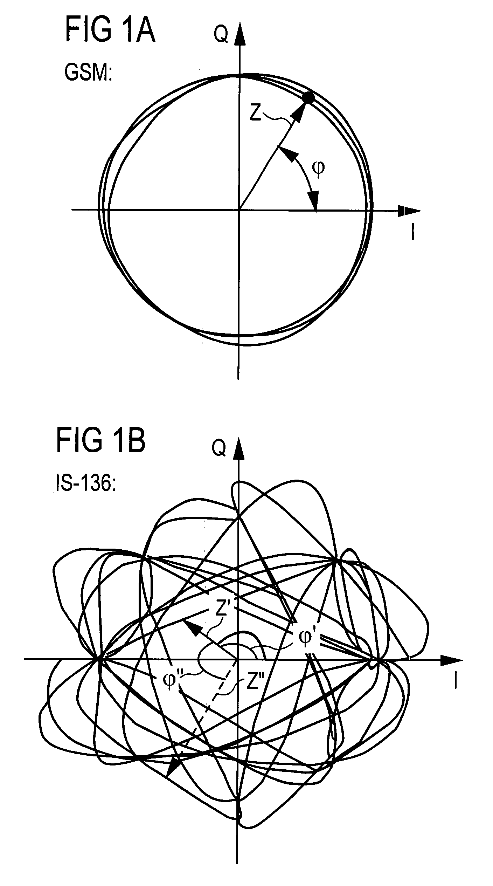

Figuren 1a und 1b zeigen jeweils Zeigerdiagramme, mittels welchen sich die Mobilfunk-Signale beschreiben lassen, wie sie von einem Mobilfunk-Sender ausgesendet werden, der nach dem GSM-Modus (Fig. 1a) oder nach dem IS136-Modus (Fig. 1b) arbeitet. Der gegenwärtige Zustand des jeweiligen Zeigers Z, Z' bzw. Z'' kann entweder durch kartesische Koordinaten Q und I oder durch Polarkoordinaten Phase ϕ und Zeigerlänge |Z| beschrieben werden. Betrachtet man die Figuren 1a und 1b, so erkennt man den wesentlichen Unterschied zwischen den beiden Mobilfunk-Übertragungsmoden GSM und IS136. Während sich beim GSM-Standard im Verlauf eines Sendebursts die Länge des Zeigers Z während einer Periode, d.h. während eines Umlaufs um 360°, im wesentlichen nicht ändert, sondern sich allein die Phase ϕ über der Zeit ändert, ändert sich bei dem IS136-Standard sowohl die Länge des Zeigers Z - hier repräsentiert durch den Zeiger Z' und den strichliert eingezeichneten Zeiger Z'' - als auch der Phasenwinkel, hier repräsentiert durch die beiden Winkel ϕ ' und ϕ '' über der Zeit. Mit anderen Worten handelt es sich bei dem Mobilfunksignal gemäß dem GSM-Mobilfunk-Übertragungsmodus um ein rein phasenmoduliertes Mobilfunk-Signal, wohingegen das Mobilfunk-Signal des IS136-Mobilfunk-Übertragungsmodus sowohl phasen- als auch amplitudenmoduliert ist.

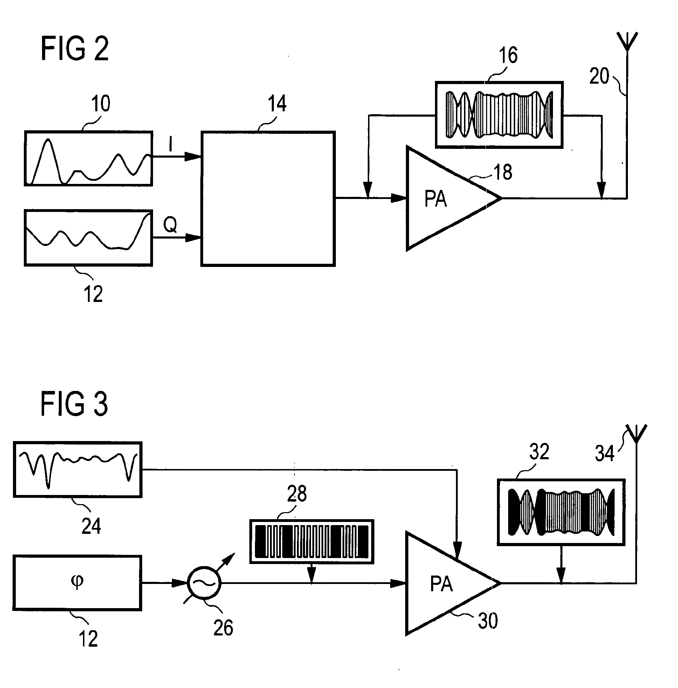

Betrachtet man nun Figur 2, so erkennt man im Rahmen der dort gezeigten Funktionsblock-Darstellung die herkömmliche Realisierung einer Schaltung zur Gewinnung eines phasen- und amplitudenmodulierten Signals. Die beiden kartesischen Signalkomponenten 10 und 12, hier auch bezeichnet als I und Q, werden in einen linearen Modulator 14 eingegeben. Dieser erzeugt ein sowohl phasen- als auch amplitudenmoduliertes Mobilfunksignal 16, welches dann über einen technisch aufwendigen linearen Leistungsverstärker 18 verstärkt wird und über eine Antenne 20 abgestrahlt wird. Der wesentliche Nachteil der Implementierung nach Figur 2 liegt darin, daß der Leistungsverstärker 18 technisch aufwendig ausgebildet sein muß und daher kostenintensiv in der Anschaffung ist, was die Herstellung eines entsprechend ausgerüsteten Mobilfunk-Endgeräts verteuert. Darüber hinaus weist der lineare Leistungsverstärker 18 einen verhältnismäßig hohen Stromverbrauch auf, was sich negativ auf die Standby-Zeit und die Sprechzeit des entsprechenden Mobilfunk-Endgeräts auswirkt.

Betrachtet man nun Figur 3, in welcher ein an sich bereits bekanntes Polärtransmitter-Prinzip in Funktionsblock-Darstellung gezeigt ist, so erkennt man, daß ein Phasensignal 22 sowie ein Amplitudensignal 24 nicht in einen gemeinsamen Modulator gespeist werden. Vielmehr wird das Phasensignal 22 einem HF-Modulator 26 zugeführt, so daß ein Signal 28 erhalten wird, welches allein Phaseninformation enthält. Dieses Phaseninformation enthaltende Signal wird über einen nicht linearen Leistungsverstärker 30 verstärkt. Der Leistungsverstärker 30 kann deshalb als nicht linearer Leistungsverstärker ausgebildet sein, weil das rein phasenmodulierte Eingangssignal 28 aufgrund seiner konstanten Amplitude eine konstante Einhüllende (envelope) aufweist und somit leichter zu verstärken ist. Der Leistungsverstärker 30 kann deshalb in Sättigung betrieben werden, was dessen Stromverbrauch herabsetzt. Am Steuereingang des Leistungsverstärkers 30 liegt die Amplitudeninformation 24 an, so daß der Leistungsverstärker 30 nach Maßgabe der Amplitudeninformation 24 gesteuert wird und somit das sich ergebende Ausgangssignal 32 letztendlich amplituden- und phasenmoduliert ist und über die Antenne 34 übertragen werden kann.

Es zeigt sich also bei Vergleich der Figuren 2 und 3, daß bei Figur 3 unter technisch vereinfachtem Aufwand das gleiche im wesentlichen phasen- und amplitudenmodulierte Signal 32 erhalten werden kann, wie das Signal 16 im Fall gemäß Figur 2.

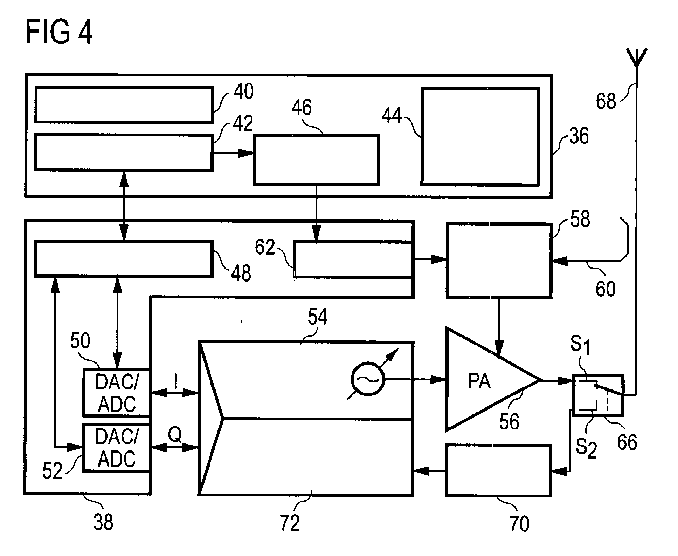

Ausgehend von den mit Bezug auf Figuren 1 bis 3 angestellten grundsätzlichen Überlegungen sei nun mit Bezug auf Figur 4 auf eine Funktionsblock-Darstellung eingegangen, welche eine mögliche Realisierung der Erfindung repräsentiert.

In Figur 4 sind grundsätzlich zwei Prozessoren gezeigt, nämlich der Prozessor 36, welcher als digitaler Prozessor ausgeführt ist, sowie der Prozessor 38, welcher als konfigurierbarer Chipsatz ausgeführt ist. Der Prozessor 36 umfaßt eine Bitverarbeitungseinheit 40 sowie eine Signalverarbeitungseinheit 42. Ferner umfaßt der Prozessor 36 eine Speichereinheit 44, in welcher Betriebssystemdaten sowie Timing-Daten abgespeichert sind. In einer Speichereinheit 46 sind Amplitudeninformationsdaten sowie Daten zur Einstellung der gegenwärtigen Sendeleistung (power ramping) abgespeichert.

Die Signalverarbeitungseinheit 42 kommuniziert mit einem Modulator 48, welcher in dem konfigurierbaren Chipsatz 38 vorgesehen ist. Dieser Modulator 48 gibt digitale Ausgangssignale aus, welche die kartesischen Koordinaten I und Q für das gegenwärtige Basisband-Mobilfunk-Signal darstellen. Diese Ausgangssignale werden in den Wandlern 50, 52 digital-analoggewandelt und an einen Phasenmodulator 54 übertragen.

Nach der reinen Phasenmodulation wird das Ausgangssignal des Phasenmodulators 54 an den Leistungsverstärker 56 übertragen. Bei dem Leistungsverstärker 56 handelt es sich um einen nicht linearen Leistungsverstärker, welcher wie mit Bezug auf Figur 3 beschrieben, entsprechend kostengünstig gestaltet sein kann. Der Leistungsverstärker 56 wird über eine Leistungsregeleinheit 58 gesteuert, welche zum einen über die Leistung 60 ein Feedback über die gegenwärtige Sendeleistung bekommt sowie zum anderen Informationen aus dem Speicher 46 zur gegenwärtig erforderlichen Sendeleistung bzw. zur gegenwärtig übertragenen Amplitudeninformation über einen weiteren Wandler 62 erhält, welcher als Digital-Analog-Wandler ausgeführt ist. Anhand der Informationen steuert die Leistungsregeleinheit 58 den Leistungsverstärker 56, so daß dieser an seinem Ausgang 64 ein Mobilfunk-Signal ausgibt, welches entweder rein phasenmoduliert ist oder sowohl phasen- als auch amplitudenmoduliert ist. Das Ausgangssignal 64 wird dann im Sendefall über den Schalter 66 zu der Antenne 68 übertragen und von dieser an eine Basisstation ausgesendet.

Figur 4 berücksichtigt auch den Fall des Empfangs von Mobilfunksignalen über die Antenne 68. In diesem Fall ist der Schalter 66 von seiner Schaltposition S₁ auf die Schaltposition S₂ umgeschaltet, so daß das empfangene Signal über einen Vorverstärker 70 einem Direktwandlungsempfänger 72 zugeführt wird, dort in entsprechende Signalkomponenten I und Q umgewandelt wird und über die Wandler 50 und 52 an den Filter 48 und von diesem zurück an die Signalverarbeitungseinheit 42 übertragen wird. In der Signalverarbeitungseinheit 42 erfolgt dann eine an sich bekannte Entschlüsselung und Verarbeitung des empfangenen Signals.

Die in Figur 4 dargestellte Implementierung der Erfindung ist grundsätzlich für die Übertragung von GSM-Mobilfunk-Signalen ausgelegt, welche allein phasenmoduliert sind, welche jedoch zu Beginn eines jeden Bursts durch die Leistungsregeleinheit 58 und den Leistungsverstärker 56 in ihrer Leistung hochgestuft werden müssen sowie zum Ende eines jeden Bursts über die Leistungsregeleinheit 58 und den Leistungsverstärker 56 in ihrer Leistung stufenweise herabgesetzt werden müssen. Diese ohnehin bei der Erzeugung von GSM-Mobilfunk-Signalen erforderliche Hardwarekomponente wird nun dazu ausgenutzt, die aus dem Speicher 46 abgerufene Amplitudeninformation, gesteuert durch die Signalverarbeitungseinheit 42, zur Steuerung des Leistungsverstärkers 56 vermittels der Leistungsregeleinheit 58 zu verwenden und somit den Leistungsverstärker 56 derart zu steuern, daß dieser dem Ausgangssignal des Phasenmodulators 54 zusätzlich Amplitudeninformation aufprägt. Dadurch wird eine Erzeugung eines sowohl phasenmodulierten als auch amplitudenmodulierten Signals ermöglicht.

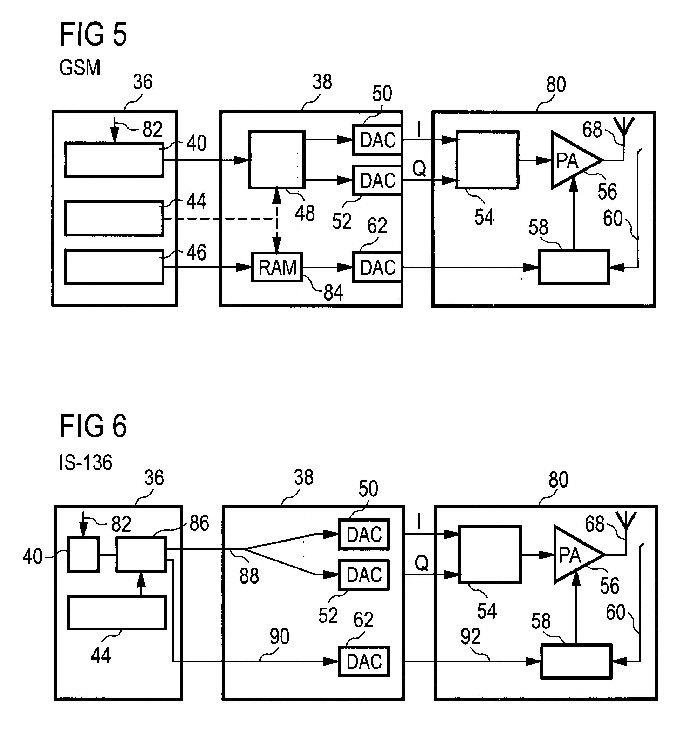

Figuren 5 und 6 zeigen nun verdeutlicht die beiden Sendeprinzipien und deren hardwaremäßige Implementierung. Es werden zur Vermeidung von Wiederholungen dieselben Bezugszeichen verwendet wie mit Bezug auf Figur 4 eingeführt. In Figuren 5 und 6 sind die Basiskomponenten, nämlich digitaler Prozessor 36, analoger Prozessor 38 und Funkmodul 80 als übergeordnete Funktionsblöcke gezeichnet. In dem digitalen Prozessor 36 werden in die Bitverarbeitungseinheit 40 einzelne Bits 82 eingegeben. Diese werden an den GMSK-Modulator 48 nach einer Zwischenverarbeitung geschickt, welcher dann unter Zwischenschaltung der Wandler 50, 52 die beiden analogen Signalkomponenten I und Q erzeugt. Diese werden dem Phasenmodulator 54 zugeführt, welcher dann ein phasenmoduliertes Signal an den Leistungsverstärker 56 ausgibt. Darüber hinaus wird das Signal-Timing über die Timing-Einheit 44 und die gegenwärtige Sendeleistung über die Einheit 46 gesteuert, welche entsprechende Signale an den Speicher 84 ausgeben. Das vom Speicher 84 ausgegebene Signal wird unter Zwischenschaltung des Wandlers 62 an die Leistungsregeleinheit 58 übertragen, welche dann unter Berücksichtigung einer Leistungsrückkopplung 60 den Leistungsverstärker 56 steuert. Dieser gibt über die Antenne 68 für den Fall von Figur 5 ein rein phasenmoduliertes Signal aus.

Betrachtet man hingegen gemäß Figur 6 den Fall der Synthese eines sowohl phasen- als auch amplitudenmodulierten Signals mittels der drei Basiskomponenten 36, 38 und 80, so ergibt sich folgendes Funktionsschema. Die Datenbits 82 werden in die Bitverarbeitungseinheit 40 eingegeben. In der Bitverarbeitungseinheit werden die Bits einer entsprechenden Modulation in dem softwaremäßig realisierten Modulator 86, im Falle des IS136-Standards einem π/4-DQPSK-Modulator moduliert.

Der π/4-DQPSK-Modulator 86 wird über die Einheit 44 getaktet bzw. hinsichtlich seines Timings eingestellt. Das Ausgangssignal des DQPSK-Modulators umfaßt einerseits die Phaseninformation 88 sowie andererseits die Amplitudeninformation 90, welche als separate Signale weiterverarbeitet werden. Die Phaseninformation wird in dem konfigurierbaren Prozessor 38 in kartesische Koordinaten aufgespalten und über die Digital-Analog-Wandler 50, 52 zu Analog-Signalen gewandelt. Diese Analog-Signale werden dem Phasenmodulator 54 zugeführt und nach der Phasenmodulation über den Leistungsverstärker 56 verstärkt. Die Verstärkung erfolgt anhand der Rückkopplung der gegenwärtigen Sendeleistung 60 sowie anhand der über den Digital-Analog-Wandler 62 analogen Amplitudensignale 92, welche von der Leistungsregeleinheit zu einer gemeinsamen Steuergröße 94 zur Steuerung des Leistungsverstärkers 56 genutzt werden. Über die Antenne 68 wird dann ein von dem Leistungsverstärker 56 ausgehendes sowohl phasen- als auch amplitudenmoduliertes Mobilfunk-Signal ausgegeben.

Die Erfindung zeigt eine einfache Möglichkeit auf, wie ein herkömmlicher zur Erzeugung eines rein phasenmodulierten Mobilfunk-Signals ausgelegter Chipsatz, beispielsweise ein GSM-Chipsatz, unter geringen technischen, insbesondere als Software implementierten, Modifikationen dazu genutzt werden kann, wahlweise ein rein phasenmoduliertes oder sowohl phasen- als auch amplitudenmoduliertes Mobilfunksignal bereitzustellen. Mit anderen Worten kann ein geringfügig modifizierter Chipsatz dazu verwendet werden, verschiedene sich hinsichtlich ihrer Modulationsart unterscheidende Mobilfunk-Standards zu bedienen.

## Patentansprüche

1. Verfahren zum wahlweisen Erzeugen von Mobilfunk-Signalen wenigstens zweier sich unterscheidender Mobilfunk-Übertragungsmoden, wobei wenigstens ein erster Mobilfunk-Übertragungsmodus auf einer reinen Phasenmodulation eines Basisband-Mobilfunk-Signals beruht und wenigstens ein weiterer Mobilfunk-Übertragungsmodus auf einer Kombination aus Phasenmodulation und Amplitudenmodulation des Basisband-Mobilfunk-Signals beruht,
wobei weiter in einem ersten Schritt das Basisband-Mobilfunk-Signal einer Phasenmodulation (bei 54) unterzogen wird und
in einem zweiten Schritt das phasenmodulierte.Basisband-Mobilfunk-Signals über einen Leistungsverstärker (56) verstärkt wird,
wobei weiter für die Übertragung gemäß dem wenigstens einen ersten Mobilfunk-Übertragungsmodus in dem zweiten Schritt der Leistungsverstärker (56) nach Maßgabe der erforderlichen Sendeleistung gesteuert wird
und wobei für die Übertragung gemäß dem wenigstens einen weiteren Mobilfunk-Übertragungsmodus zur Änderung der Amplitude des phasenmodulierten Mobilfunk-Signals in dem zweiten Schritt der Leistungsverstärker (56) zusätzlich nach Maßgabe der in dem Basisband-Mobilfunk-Signal enthaltenen Amplitudeninformation gesteuert wird.

2. Verfahren nach Anspruch 1,
**dadurch gekennzeichnet,**
**daß** der wenigstens eine erste Mobilfunk-Übertragungsmodus auf einer GMSK-Modulation (bei 48) beruht, insbesondere gemäß dem GSM-Mobilfunk-Übertragungsmodus, und dass der wenigstens eine zweite Mobilfunk-Übertragungsmodus auf einer π/4-DQPSK-Modulation (bei 86) beruht, insbesondere gemäß dem IS 136-Mobilfunk-Übertragungsmodus.

3. Verfahren nach Anspruch 1 oder 2,
**dadurch gekennzeichnet,**
**daß** wenigstens ein Teil der sich unterscheidenden Mobilfunk-Übertragungsmoden auf TDMA (Time Division Multiple Acess) beruhen.

4. Verfahren nach einem der vorangehenden Ansprüche,
**dadurch gekennzeichnet,**
**daß** der Leistungsverstärker (56) im zweiten Schritt in Sättigung betrieben wird.

5. Verfahren nach einem der vorangehenden Ansprüche,
**dadurch gekennzeichnet,**
**daß** der Leistungsverstärker (56) zumindest für den wenigstens einen ersten Mobilfunk-Übertragungsmodus, insbesondere für den GSM-Mobilfunk-Übertragungsmodus, zum Hochtasten bzw. Heruntertasten der Sendeleistung genutzt wird.

6. Verfahren nach einem der vorangehenden Ansprüche,
**dadurch gekennzeichnet,**
**daß** das Basisband-Mobilfunk-Signal vor dem ersten Schritt zur Beseitigung von Amplitudeninformation normiert wird.

7. Verfahren nach einem der vorangehenden Ansprüche,
**dadurch gekennzeichnet,**
**daß** die Mobilfunk-Signale mit zu den sich unterscheidenden Mobilfunk-Übertragungsmoden korrespondierenden, unterschiedlichen Trägerfrequenzen erzeugbar sind.

8. Verfahren nach Anspruch 7,
**dadurch gekennzeichnet,**
**daß** die zu den sich unterscheidenden Mobilfunk-Übertragungsmoden korrespondierenden Frequenzen des Basisband-Mobilfunk-Signals oder/und Trägerfrequenzen aus einem Grundtakt digital (bei 44) oder analog ermittelt werden.

9. Verfahren nach Anspruch 8,
**dadurch gekennzeichnet,**
**daß** der Grundtakt eine Frequenz von 13 MHz aufweist.

10. Verfahren nach einem der Ansprüche 7 - 9,
**dadurch gekennzeichnet,**
**daß** die zu den sich unterscheidenden Mobilfunk-Übertragungsmoden korrespondierenden Trägerfrequenzen zumindest teilweise durch eine automatisches Frequenzkorrektur-Regelungsverfahren (AFC-Regelung) oder durch ein mathematisches Frequenzoffset-Verfahren, vorzugsweise aus dem Grundtakt, ermittelt werden.

11. Verfahren nach einem der vorangehenden Ansprüche,
**dadurch gekennzeichnet,**
**daß** die zu den sich unterscheidenden Mobilfunk-Übertragungsmoden korrespondierenden Frequenzen der Basisband-Mobilfunk-Signale zumindest teilweise durch Interpolation, insbesondere lineare Interpolation, vorzugsweise aus dem Grundtakt, ermittelt werden.

12. Vorrichtung zum wahlweisen Erzeugen von Mobilfunk-Signalen wenigstens zweier sich unterscheidender Mobilfunk-Übertragungsmoden, insbesondere gemäß dem Verfahren nach einem der vorangehenden Ansprüche, umfassend:
- Basisband-Verarbeitungsmittel (36, 38) zum Erzeugen eines Basisband-Mobilfunk-Signals,
- Phasenmodulationsmittel (54) zum Phasenmodulieren des erzeugten Basisband-Mobilfunk-Sianals und
- wenigstens einen steuerbaren Leistungsverstärker (56) zum Einstellen der Sendeleistung mit welcher die Mobilfunk-Signale gesendet werden,
wobei der wenigstens eine Leistungsverstärker (56) in wenigstens einem ersten Mobilfunk-Übertragungsmodus das phasenmodulierte Mobilfunk-Signal (I, Q) in Abhängigkeit von der erforderlichen Sendeleistung verstärkt und in wenigstens einem weiteren Mobilfunk-Übertragungsmodus das phasenmodulierte Mobilfunk-Signal (I, Q) in Abhängigkeit von der erforderlichen Sendeleistung und der in dem Basisband-Mobilfunk-Signal enthaltenen Amplitudeninformation (92) verstärkt.

13. Vorrichtung nach Anspruch 12,
**dadurch gekennzeichnet,**
**daß** die Basisband-Verarbeitungsmittel (36, 38) wenigstens zwei sich voneinander unterscheidende Modulatoren (48, 86) aufweisen, insbesondere einen GMSK- Modulator (48) und einen π/4-DQPSK-Modulator (86).

14. Vorrichtung nach Anspruch 13,
**dadurch gekennzeichnet,**
**daß** wenigstens einer der Modulatoren (48) in den Basisband-Verarbeitungsmitteln (36, 38) hardwaremäßig implementiert ist.

15. Vorrichtung nach Anspruch 13 oder 14,
**dadurch gekennzeichnet,**
**daß** wenigstens einer der Modulatoren (86) in den Basisband-Verarbeitungsmitteln (36, 38) softwaremäßig implementiert ist.

16. Vorrichtung nach Anspruch 13, 14 oder 15,
**dadurch gekennzeichnet,**
**daß** je nach ausgewähltem aktuellem Mobilfunk-Übertragungsmodus der jeweils diesem Mobilfunk-Übertragungsmodus zugeordnete Modulator (48, 86) aktiv ist und der wenigstens eine weitere diesem Mobilfunk-Übertragungsmodus nicht zugeordnete Modulator (86, 48) inaktiv oder/und kurzgeschlossen ist.

17. Vorrichtung nach einem der Ansprüche 12 - 16,
**dadurch gekennzeichnet,**
**daß** die Basisband-Verarbeitungsmittel (36, 38) wenigstens einen Digital-Analog-Wandler (50, 52) zum Wandeln des Basisband-Mobilfunk-Signals aufweisen, der den Phasemodulationsmitteln (54) vorgeschaltet ist.

18. Vorrichtung nach einem der Ansprüche 12 - 17,
**dadurch gekennzeichnet,**
**daß** die Basisband-Verarbeitungsmittel (36, 38) wenigstens einen Digital-Analog-Wandler (62) zum Wandeln des Basisband-Mobilfunk-Signals aufweisen, der dem Leistungsverstärker (56) an dessen Steuereingang vorgeschaltet ist.

19. Vorrichtung nach einem der Ansprüche 12 - 18,
**gekennzeichnet durch**
- einen digitalen Basisbandprozessor (36), welcher zumindest einen Teil der digitalen Komponenten (40, 44, 46) der Basisband-Verarbeitungsmittel aufweist,
- einen dem digitalen Basisbandprozessor (36) nachgeschalteten analogen Basisbandprozessor (38) , welcher zumindest einen Teil der analogen Komponenten (48, 50, 52, 62, 84) der Basisband-Verarbeitungsmittel aufweist, und
- ein Funkmodul (80), welches zumindest das Phasenmodulationsmittel (54) und den Leistungsverstärker (56) aufweist,
wobei der digitale Basisbandprozessor (36), der analoge Basisbandprozessor (38) und das Funkmodul (80) zur Erzeugung von Phaseninformation und Amplitudeninformation enthaltenden Mobilfunk-Signalen nach dem Prinzip eines Polartransmitters zueinander angeordnet sind.

20. Vorrichtung nach einem der Ansprüche 12 - 19,
**gekennzeichnet durch**
einen Empfangspfad (64, 70, 72).

21. Mobilfunkendgerät, umfassend eine Vorrichtung nach einem der Ansprüche 12 - 20.
